# FASCICULE DE BREVET EUROPEEN

(11) **EP 1 038 120 B1**
(45) Date de publication et mention de la délivrance du brevet: **29.01.2003**
(21) Numéro de dépôt: 98951558.0
(22) Date de dépôt: 26.10.1998
(51) Int. Cl.: F16F 1/12, B60G 15/06, B60G 11/16

(54) **TAMPON DE FILTRATION DE VIBRATIONS POUR UNE SUSPENSION DE VEHICULE AUTOMOBILE**
SCHWINGUNGSDÄMPFENDER RING FÜR DIE RADAUFHÄNGUNG EINES KRAFTFAHRZEUGES
VIBRATION FILTERING BUFFER FOR MOTOR VEHICLE SUSPENSION

(30) Priorité: 27.10.1997 FR 9713429
(43) Date de publication de la demande: 27.09.2000
(73) Titulaire: Renault s.a.s., 92100 Boulogne Billancourt (FR)
(72) Inventeur: BOURLON, Franck, F-28700 Aunay sur Auneau (FR); DUPONT, Radjou, F-78000 Versailles (FR); ZHANG, Charles, F-78280 Guyancourt (FR)
(86) Numéro de dépôt international: FR9802291
(87) Numéro de publication internationale: WO99022159

(56) Documents cités:
- EP-A- 0 564 824
- FR-A- 1 341 188
- US-A- 3 051 469
- US-A- 5 421 565
- PATENT ABSTRACTS OF JAPAN vol. 095, no. 010, 30 novembre 1995 & JP 07 167182 A (TOKAI RUBBER IND LTD), 4 juillet 1995

## Description

La présente invention concerne un tampon de filtration des vibrations.

L'invention trouve plus particulièrement à s'appliquer dans le domaine de la construction automobile et elle concerne un tampon destiné à être interposé axialement entre la dernière spire inférieure d'un ressort en hélice de suspension de véhicule automobile et une pièce de la suspension en forme de coupelle.

On connaît du document US-A-5.421.565 un exemple d'un tel tampon du type en forme d'un anneau dont la face supérieure comporte une rainure axiale, ouverte verticalement vers le haut, en forme de rampe en hélice, de section semi-circulaire complémentaire de celle du fil du ressort et dans laquelle la dernière spire du ressort prend appui sensiblement sur toute sa longueur, soit sur une circonférence d'environ 360°.

Dans ce document, la rainure est de section semi-circulaire continue, c'est-à-dire qu'elle épouse complètement la forme du fil du ressort de suspension.

L'agencement d'un tel tampon en coopération avec la coupelle métallique en tôle emboutie qui constitue la pièce de la suspension, ou de la caisse du véhicule, qui reçoit le tampon, permet de réaliser un dispositif de filtration entre le ressort de suspension et la coupelle inférieure qui est par exemple celle d'une jambe de force d'un train avant ou arrière, de type McPherson, pseudo McPherson ou appartenant à un combiné ressort-amortisseur.

Le dispositif de filtration permet d'améliorer le confort acoustique du véhicule en filtrant notamment les bruits résultants du roulage du véhicule.

Les caractéristiques de la coupelle inférieure, notamment son épaisseur, la forme de son embouti et de son bord tombé, déterminent la réduction du couplage avec l'amortisseur et permettent au dispositif de filtration d'être efficace en déterminant une raideur dynamique dite "raideur d'accueil".

Le tampon filtrant proprement dit a pour fonction de réduire la contribution des modes du ressort de la jambe de force par rapport à l'ensemble des organes du train roulant et de la structure, c'est-à-dire les efforts d'entrée du point de vue vibratoire.

La publication FR-A-1341188 décrit un tampon filtrant en forme d'anneau sur lequel vient se centrer le ressort de suspension et qui présente des rainures débouchantes radialement.

La présente invention a pour objet de proposer un perfectionnement à un tampon de filtration du type mentionné précédemment qui permet notamment d'obtenir le compromis nécessaire entre la prestation acoustique, la tenue en endurance du tampon et le comportement routier du véhicule.

Dans ce but, l'invention propose un tampon selon les caractéristiques de la revendication 1.

Selon d'autres caractéristiques de l'invention :
- chaque cavité est délimitée par deux faces latérales parallèles d'orientation radiale ;
- chaque cavité est délimitée radialement par deux faces transversales parallèles d'orientation tangentielle ;
- le fond de chaque cavité est une face plane perpendiculaire à l'axe du tampon ;
- la rainure comporte une série de cavités réparties angulairement de manière régulière ;
- le tampon est délimité par une face latérale externe tronconique et par un fond annulaire plat, et il comporte une série d'encoches qui s'étendent radialement dans la face latérale et axialement dans le fond annulaire plat ;
- chaque encoche est délimitée par deux faces latérales parallèles d'orientation radiale ;
- chaque encoche est délimitée vers le haut par une face plane perpendiculaire à l'axe du tampon ;
- chaque encoche débouche radialement vers l'intérieur dans une face latérale interne du tampon ;
- le tampon comporte une série d'encoches réparties angulairement de manière régulière ;
- le tampon comporte des moyens d'indexation de sa position angulaire par rapport à la coupelle.

D'autres caractéristiques et avantages de l'invention apparaîtront à la lecture de la description détaillée qui suit pour la compréhension de laquelle on se reportera aux dessins annexés dans lesquels :
- la figure 1 est une vue partielle en section axiale des principaux éléments d'un ensemble de suspension de véhicule automobile comportant un tampon de filtration des vibrations conforme aux enseignements de l'invention ;
- la figure 2 est une vue en perspective de trois-quarts de dessus du tampon de filtration des vibrations ;
- la figure 3 est une vue latérale du tampon selon la flèche F3 de la figure 5 ;
- la figure 4 est une vue de détail en section axiale par un plan passant par une des encoches du tampon ; et
- la figure 5 est une vue axiale de dessus du tampon.

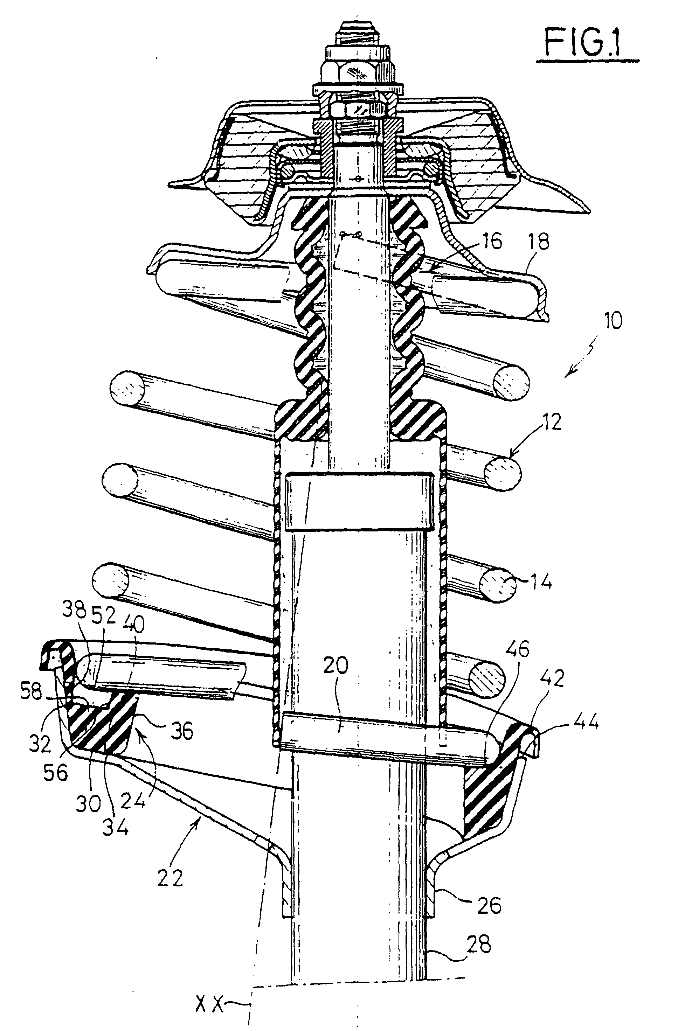

On a représenté sur la figure 1 un ensemble de suspension 10, de structure générale connue, qui ne sera pas décrit en détail.

On remarque toutefois sur cette figure que la suspension 10 comporte un ressort de suspension 12 du type en hélice réalisé en fils à ressort 14 de section circulaire.

La dernière spire supérieure 16 du ressort en hélice 12 prend appui axialement directement contre une coupelle métallique 18 de la suspension tandis que sa dernière spire inférieure 20 prend appui axialement contre une coupelle inférieure en tôle emboutie 22, avec interposition d'un tampon de filtration des vibrations 24.

La coupelle 22 est de conception générale connue et elle est fixée par sa collerette inférieure 26 à un tube 28 de la suspension 12 qui s'étend axialement à travers la coupelle 22 et le tampon 24.

La conformation de la coupelle 22 est telle que l'axe général du ressort est incliné par rapport à l'axe du tube et on appellera par la suite axe général du tampon l'axe central de ce dernier correspondant à l'axe X-X du ressort 12.

Selon une conception générale connue, le tampon 24 est une pièce en forme générale d'anneau en matériau amortisseur des vibrations, par exemple en caoutchouc ou en matériau élastomère.

Le corps annulaire 30 du tampon 24 est délimité par une face latérale externe tronconique 32, par une face inférieure plane 34 perpendiculaire à l'axe X-X, par une face latérale interne légèrement tronconique 36 et par une face supérieure 38 parallèle à la face inférieure plane 34.

Le profil externe du corps 30 du tampon annulaire 24 est complémentaire de celui de la coupelle 22, c'est-à-dire que la face latérale externe tronconique 32 coopère avec la face interne de profil complémentaire tronconique concave 38 de la coupelle tandis que la face inférieure 34 est en appui axial contre un fond annulaire plat 40 de la coupelle.

Comme on peut le voir plus particulièrement sur la figure 1, le tampon annulaire 24 comporte une lèvre latérale supérieure 42 qui s'étend sur toute sa périphérie et qui recouvre le bord supérieur libre de la coupelle 22.

Selon une conception connue, la face supérieure 38 du corps annulaire 30 comporte une rainure 46 d'orientation axiale et ouverte verticalement vers le haut qui est de section, par un plan axial, semi-circulaire et dont les dimensions sont telles que son profil est complémentaire de celui du fil 14 du ressort 12.

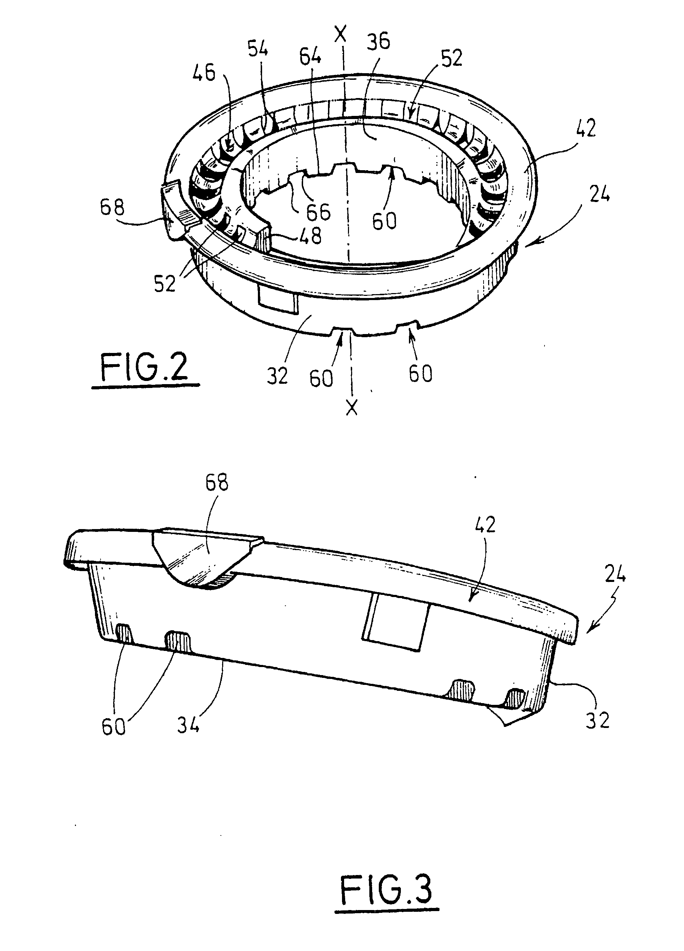

Comme on peut le voir sur les figures 2 et 5, la rainure 46 s'étend circulairement sur un tour, c'est-à-dire sensiblement sur 360° d'angle.

De manière à se conformer à la forme et au profil de la dernière spire inférieure 20 du ressort 12, la rainure 46 est réalisée en forme d'une rampe en hélice, le décalage en altitude entre son point le plus bas et son point le plus haut, qui sont adjacents angulairement, étant délimité par une facette d'orientation radiale 48 qui constitue aussi une butée de positionnement angulaire pour la face transversale d'extrémité libre 50 de la dernière spire 20.

Conformément aux enseignements de l'invention, et afin d'améliorer les performances du tampon de filtration 24, il est prévu une série de cavités 52 formées dans la rainure 46.

Dans l'exemple illustré sur les figures, il est prévu une série de cavités réparties angulairement de manière régulière sur toute la longueur de la rainure 46.

Chaque cavité 52 est de forme générale parallélépipédique rectangle et elle débouche verticalement vers le haut dans le fond de la rainure 46.

A cet effet, chaque cavité 52 est délimitée latéralement par deux faces opposées parallèles et d'orientation radiale 54. Chaque cavité 52 est aussi délimitée transversalement par deux faces transversales parallèles et opposées 56 qui sont d'orientation sensiblement tangentielle.

Enfin, le fond 58 de chaque cavité 52 est une face plane perpendiculaire à l'axe X-X.

Toujours dans le but d'améliorer les performances du tampon de filtration 24, et notamment ses performances des filtration des vibrations, il est prévu dans sa face inférieure 34 et dans sa face latérale tronconique 32 une série d'encoches.

Comme dans le cas des cavités 52, les encoches 60 sont réparties angulairement de manière régulière mais pas sur la totalité du pourtour du tampon 24.

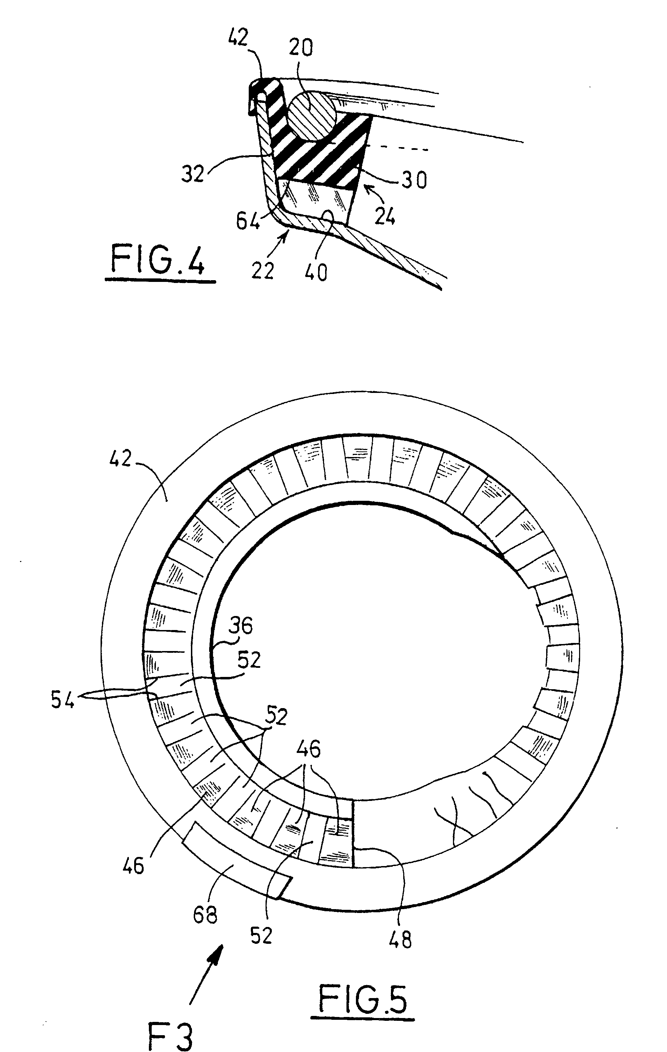

De plus, les encoches 60 sont de préférence décalées angulairement par rapport aux cavités 52, c'est-à-dire qu'elles ne se trouvent pas au droit des cavités comme on peut le voir aux figures 1 et 4.

Chaque encoche 60 est une encoche débouchante axialement en direction de l'axe X-X, c'est-à-dire qu'elle est ouverte d'une part dans la face latérale externe 32 et d'autre part dans la face latérale interne 36 du corps annulaire 30.

Chaque encoche est ouverte axialement vers le bas dans le fond 34 du corps 30 et elle est délimitée verticalement vers le haut par une face supérieure plane 64 perpendiculaire à l'axe X-X.

Enfin, chaque encoche 60 est délimitée par deux faces latérales parallèles 66 d'orientation radiale.

Afin de positionner angulairement le tampon 24 par rapport à la coupelle 22, sa lèvre 42 comporte un doigt 68 formé en relief qui est prévu pour être reçu dans un embrèvement de forme complémentaire (non représenté sur les figures) de la coupelle 22.

## Revendications

1. Tampon (24) de filtration de vibrations destiné à être interposé axialement entre la dernière spire inférieure (20) d'un ressort (12) en hélice de suspension, notamment de suspension de véhicule automobile, et une pièce de suspension en forme de coupelle inférieure (22), du type dans lequel le tampon (24) est en forme d'un anneau en matériau absorbant des vibrations, **caractérisé en ce que** la face supérieure (30) de l'anneau comporte une rainure axiale (46) en forme de rampe en hélice, de section semi-circulaire complémentaire de celle du fil (14) du ressort (12) et dans laquelle la dernière spire (20) du ressort prend appui sensiblement sur toute sa longueur, et **en ce que** la rainure (46) d'appui du ressort comporte une série de cavités (52) qui s'étendent axialement vers le bas depuis le fond de la rainure (46).

2. Tampon selon la revendication 1, **caractérisé en ce que** chaque cavité (52) est délimitée par deux faces latérales parallèles (54) d'orientation radiale.

3. Tampon selon l'une des revendications 1 ou 2, **caractérisé en ce que** chaque cavité (52) est délimitée radialement par deux faces transversales parallèles (56) d'orientation tangentielle.

4. Tampon selon l'une quelconque des revendications précédentes, **caractérisé en ce que** le fond (46) de chaque cavité est une face plane (58) perpendiculaire à l'axe (X-X) du tampon.

5. Tampon selon l'une quelconque des revendications précédentes, **caractérisé en ce que** la rainure (46) comporte une série de cavités (52) réparties angulairement de manière régulière.

6. Tampon selon l'une quelconque des revendications précédentes, **caractérisé en ce qu'**il est délimité latéralement par une face latérale externe tronconique (32) et par un fond annulaire plat (34), et **en ce qu'**il comporte une série d'encoches (60) qui s'étendent radialement dans la face latérale (32) et axialement dans le fond annulaire plat (34).

7. Tampon selon la revendication 6, **caractérisé en ce que** chaque encoche (60) est délimitée par deux faces latérales parallèles (66) d'orientation radiale.

8. Tampon selon l'une des revendications 6 ou 7, **caractérisé en ce que** chaque encoche (60) est délimitée vers le haut par une face plane (64) perpendiculaire à l'axe (X-X) du tampon.

9. Tampon selon l'une quelconque des revendications 6 à 8, **caractérisé en ce que** chaque encoche (60) débouche radialement vers l'intérieur dans la face latérale interne (36) du tampon (24).

10. Tampon selon l'une quelconque des revendications 6 à 9, **caractérisé en ce qu'**il comporte une série d'encoches (60) réparties angulairement de manière régulière.

11. Tampon selon l'une quelconque des revendications précédentes, **caractérisé en ce qu'**il comporte des moyens (68) d'indexation de sa position angulaire par rapport à la coupelle (22).

## Patentansprüche

1. Schwingungsdämpfer (24) zum axialen Einsetzen zwischen der letzten unteren Windung (20) einer Schraubenfeder (12) der Aufhängung, insbesondere der Aufhängung eines Kraftfahrzeuges, und einem Bauteil der Aufhängung in Form eines unteren Federtellers (22), wobei der Dämpfer (24) die Form eines Ringes aufweist und aus einem schwingungsdämpfenden Material besteht, **dadurch gekennzeichnet, dass** die obere Fläche (30) des Ringes eine axial angeordnete Nut (46) mit einer schraubenförmigen Steigung und einem halbkreisförmigen Querschnitt, der komplementär zu demjenigen des Drahtes (14) der Feder (12) ist, aufweist, in der sich die letzte Windung (20) der Feder im wesentlichen über ihr gesamte Länge abstützt und dass die Nut (46) zur Abstützung der Feder eine Reihe von Aussparungen (52) aufweist, die sich in Axialrichtung von unten aus bis zum Boden der Nut (46) erstrecken.

2. Dämpfer nach Anspruch 1, **dadurch gekennzeichnet, dass** jede Aussparung (52) durch zwei seitliche parallele radial angeordnete Flächen (54) begrenzt ist.

3. Dämpfer nach einem der Ansprüche 1 oder 2, **dadurch gekennzeichnet, dass** jede Aussparung (52) in Radialrichtung durch zwei seitliche parallele in Tangentialrichtung angeordnete Querflächen (56) begrenzt ist.

4. Dämpfer nach einem der vorhergehenden Ansprüche, **dadurch gekennzeichnet, dass** der Boden (46) einer jeden Aussparung eine ebene Fläche (58) ist, die senkrecht zur Achse (X-X) des Dämpfers angeordnet ist.

5. Dämpfer nach einem der vorhergehenden Ansprüche, **dadurch gekennzeichnet, dass** die Nut (46) eine Reihe von Aussparungen (52) aufweist, die winkelmässig in gleichmässiger Weise verteilt sind.

6. Dämpfer nach einem der vorhergehenden Ansprüche, **dadurch gekennzeichnet, dass** er seitlich durch eine äussere seitliche kegelstumpfförmige Fläche (32) begrenzt ist und durch einen ringförmigen ebenen Boden (34) und dass er eine Reihe von Kerben (60) aufweist, die sich radial in der seitlichen Fläche (32) und axial im ringförmigen ebenen Boden (34) erstrecken.

7. Dämpfer nach Anspruch 6, **dadurch gekennzeichnet, dass** jede Kerbe (60) durch zwei seitliche parallele radial angeordnete Flächen (66) begrenzt ist.

8. Dämpfer nach einem der Ansprüche 6 oder 7, **dadurch gekennzeichnet, dass** jede Kerbe (6) nach oben durch eine ebene Fläche (64) begrenzt ist, die senkrecht zur Achse (X-X) des Dämpfers angeordnet ist.

9. Dämpfer nach einem der Ansprüche 6 bis 8, **dadurch gekennzeichnet, dass** jede Kerbe (60) in Radialrichtung zum Inneren hin in der inneren seitlichen Fläche (36) des Dämpfers (24) mündet.

10. Dämpfer nach einem der Ansprüche 6 bis 9, **dadurch gekennzeichnet, dass** er eine Reihe von Kerben (60) aufweist, die winkelmässig in gleichmässiger Weise verteilt sind.

11. Dämpfer nach einem der vorhergehenden Ansprüche, **dadurch gekennzeichnet, dass** er eine Anordnung (68) zur Markierung seiner Winkelstellung relativ zum Federteller (22) aufweist.

## Claims

1. Damper (24) for filtering vibrations, intended to be axially interposed between the last lower coil of a helical suspension spring (12) particularly for suspension of an automotive vehicle, and a suspension member in the form of a lower spring retainer (22) of the type wherein the damper (24) is in the form of a ring of vibration absorbing material, **characterised in that** the upper face (30) of the ring comprises an axial groove (46) in the form of a helical incline with a semicircular section complementary to that of the wire (14) of the spring (12) and in which the last coil (20) of the spring bears substantially along its entire length, and **in that** the grove (46) for supporting the spring comprises a series of cavities (52) that extend axially downwards from the base of the groove (46).

2. Damper according to claim 1, **characterised in that** each cavity (52) is delimited by two parallel lateral faces (54) orientated radially.

3. Damper according to one of claims 1 and 2, **characterised in that** each cavity (52) is delimited radially by two parallel lateral transverse faces (56) orientated tangentially.

4. Damper according to any one of the preceding claims, **characterised in that** the base (46) of each cavity is a planar face (58) perpendicular to the axis (X-X) of the damper.

5. Damper according to any one of the preceding claims, **characterised in that** the groove (46) comprises a series of cavities (52) regularly distributed in an angular manner.

6. Damper according to any one of the preceding claims, **characterised in that** it is delimited laterally by a lateral external truncated cone face (32) and by a flat annular base (34), and **in that** it comprises a series of notches (60) that extend radially in the lateral face (32) and axially in the flat annular base (34).

7. Damper according to claim 6, **characterised in that** each notch (60) is delimited by two parallel lateral faces (66) orientated radially.

8. Damper according to one of claims 6 or 7, **characterised in that** each notch (60) is delimited towards the top by a planar face (64) perpendicular to the axis (X-X) of the damper.

9. Damper according to any one of claims 6 to 8, **characterised in that** each notch (60) opens out radially towards the interior in the lateral internal face (36) of the damper (24).

10. Damper according to any one of claims 6 to 9, **characterised in that** it comprises a series of notches (60) distributed regularly in an angular manner.

11. Damper according to any one of the preceding claims, **characterised in that** it comprises means (68) for indexing its angular position with respect to the spring retainer (22).
